# EUROPEAN PATENT SPECIFICATION

(11) **EP 2 601 233 B1**
(45) Date of publication and mention of the grant of the patent: **17.12.2014**
(21) Application number: 11761800.9
(22) Date of filing: 21.09.2011
(51) Int. Cl.: C08G 18/08, C09D 175/04, C09G 1/04, C09G 1/16

(54) **REMOVABLE POLYURETHANE FLOOR COATING**
ENTFERNBARER BODENBELAG AUS POLYURETHAN
REVÊTEMENT DE SOL DE POLYURÉTHANNE AMOVIBLE

(30) Priority: 28.09.2010 US 387054 P
(43) Date of publication of application: 12.06.2013
(73) Proprietor: Rohm and Haas Company, Philadelphia, PA 19106 (US)
(72) Inventor: MERCANDO, Paul, Pennsburg PA 18073 (US); TYSAK, Theodore, Ambler PA 19002 (US)
(74) Representative: Buckley, Guy Julian
(86) International application number: PCT/US2011/052508
(87) International publication number: WO 2012/044502

(56) References cited:
- US-A- 4 622 360
- US-A1- 2008 096 995

## Description

### Field

The present application relates to floor coatings, more specifically, floor polishes.

### Background

Sacrificial floor coatings as described in US 4 622 360 are functional coatings that are designed to protect a flooring substrate for a time while improving its performance, such as controlling its slip resistance, and appearance, yet be removable with commercial floor stripper. The leading current sacrificial floor coating technology uses zinc-cross linked acrylic polymers. A key feature of zinc-cross linked acrylic floor coatings is ease of removability. However, it is a goal in the industry to provide compositions for floor coating capable of forming durable coatings without utilizing base metals such as zinc. More specifically, there is an unmet need to provide compositions for floor coatings capable of forming coatings showing excellent durability and wear resistance with removability and not utilizing base metals as cross-linking agents.

Polyurethane coatings are typically more scratch and mar resistant than acrylics, and are known to be extremely glossy and durable. However, polyurethane coatings are not easily removable, and hence have not been used as a sacrificial floor covering as the term is used in the art. In fact, polyurethane floor coatings require removal by sanding or scraping the flooring substrate, which requires special equipment, generates dust, risks damaging the flooring substrate, and is otherwise far more labor intensive than what is considered acceptable for removable floor coatings. Accordingly, it is conventional wisdom that polyurethanes cannot be used as sacrificial floor coatings.

Therefore what is needed is a sacrificial floor coating that exhibits the advantages of polyurethanes, but is easily removable with commercial floor stripper.

### Detailed Description

In one embodiment, the present invention provides use of a polyurethane dispersion having a slope of the stress modulus versus temperature curve from -0.50x10⁶ to -300x0⁶ dynes per (cm²)(°C) in a sacrificial floor coating composition, the slope of the stress modulus versus temperature curve being determined according to the paragraph bridging pages 14 and 15 of WO 2012/044502 (the application as published).

Without being bound by theory, the unique functionality that the polyurethane dispersions provide is believed attributable to a optimal range of cross-linking being present within the polyurethane dispersions, where durability is provided when a film is formed from them, but not so much durability as to prevent the swelling forces generated by the interaction of the polymeric functionality with a stripper solution from disrupting the film integrity and being readily removed.

It is understood that the spirit of the invention encompasses adjusting the amount of cross-linking. For example, increased cross-linking can increase the tensile strength of the dried coating composition, promoting durability and detergent resistance. On the other hand, reducing cross-linking can increase removability. Accordingly, a balance may be struck for a particular application.

Dynamic mechanical analysis can be useful to measure the presence of sufficient cross-linking by measuring the slope of the stress modulus versus temperature plot in the high temperature region of the polyurethane dispersion (the rubbery region above the glass transition temperature of the polymer). As posited above, a productive range of cross-linking correlates to the removability of the floor coating. In one embodiment, the preferred range of slopes of the stress modulus versus temperature curve for polyurethane dispersions useful in the present invention is from -0.50x10⁶ to -300x10⁶ dynes per (cm²)(°C), more preferably - 1.00x10⁶ to -2.75x10⁶, more preferably -1.50x10⁶ to -2.50x10⁶, more preferably -1.65x10⁶ to -2.40x10⁶, and most preferably -1.80x10⁶ to -2.30x10⁶.

In one embodiment, particularly preferred dispersions are those of polyurethane described in US 2008/0096995 (US Application Serial Number 11/665,119). These natural oil polyol based polyurethanes have a number of benefits, including sustainability, since the isocyanate-reactive material includes at least one hydroxymethyl-containing polyester polyol which is derived from a fatty acid. The fatty acids employed may come from a number of fats, such as canola oil, citrus seed oil, cocoa butter, corn oil, cottonseed oil, linseed oil, olive oil, palm oil, peanut oil, rapeseed oil, rice bran oil, safflower oil, sesame oil, soybean oil, sunflower oil, lard, chicken fat, or beef tallow.

Use of the polyurethane dispersions described above as a floor coating is one embodiment of the present invention. The ingredients used, and their proportions and manner of addition, are familiar to those versed in conventional technology emulsion polymers, including wax emulsions, Alkali Soluble Resins (ASR), film formation aids, leveling agents, wetting agents, coalescing solvents, plasticizing solvents and the like. Amounts and ingredients are dictated by the compatibility of the polymer with the desired solvents and additives and the minimum filming temperature.

In one embodiment, the sacrificial floor coating composition can be substantially removed from a substrate to which it has been applied when contacted with commercial floor stripper, such as FREEDOM® floor stripper from Diversey Inc (Sturtevant, WI, 53177), which contains multiple reagents to swell the polymer film including solvents, such as diethylene gylocol phenyl ether, and ethylene glycol phenyl ether, amines such as monoethanolamine, and surfactants such as sodium xylene sulfonate.

### Examples

The following examples are for illustrative purposes only and are not intended to limit the scope of the present invention. All percentages are by weight unless otherwise specified.

### Example 1

Floor coating compositions of the present invention include natural oil polyol-polyurethane dispersions made according to the methods of US 2008/0096995. Examples of such dispersions include the following:
Batch 1 is a 34.6% polymer solids polyurethane dispersion with a pH of 9.2. It is zinc free and alkyl phenol ethoxylate ("APEO") surfactant free.
Batch 2 is a 35.9% polymer solids polyurethane dispersion with a pH of 9.4. It is zinc free and APEO surfactant free.

### Example 2 (Comparative)

Comparative floor coating compositions include the following dispersions:
Comparative Batch A is a 35.8% polymer solids polyurethane dispersion with a pH of 8.4 (HAUTHANE HD-2117 available from Hauthaway). It is zinc free and APEO surfactant free.
Comparative Batch B is a 32.3% polymer solids polyurethane dispersion, with a pH of 7.8 (R6010 available from Essential Industries). It is zinc free and APEO surfactant free.
Comparative Batch C is a 28.5% polymer solids polyurethane dispersion, with a pH of 7.8 (R6070 available from Essential Industries). It is zinc free and APEO surfactant free.
Comparative Batch D is an acrylic emulsion technology disclosed in US Pat. No. 5,426,141, example III-5 of Table III-1. It is 38.0% polymer solids, with a pH of 9.0. It is zinc free and APEO surfactant free.
Comparative Batch E is a 22 BA/52 MMA/12 STY/8 MAA + 2.1% Zn (not zinc free) acrylic emulsion technology disclosed in US Pat. No. 4,517,330, except that a basic salt of an alkaline metal was not added. It is 38.0% polymer solids, with a pH of 9.0, and is not APEO surfactant free.

### Example 3

Floor coating compositions of the present invention contain the components recited in TABLE 1, including the polyurethane dispersions of Example 1:

**TABLE 1**

| | **Formulation 1** | **Formulation 2** |
|---|---|---|
| Water | 38.07 | 39.97 |
| KATHON® CG/ICP preservative (1.5%) | 0.04 | 0.04 |
| ZONYL® FSJ Fluorosurfactant Wetting Aid (1%) | 1.50 | 1.50 |
| Diethylene Glycol Monoethyl Ether | 2.63 | 2.63 |
| Batch 1(34.63%) | 54.85 | 0.00 |
| Batch 2 (35.9%) | 0.00 | 52.95 |
| A-C® 325 G Polyethylene Wax Emulsion (35%) | 2.91 | 2.91 |
| | 100.00 | 100.00 |

TABLE 1 lists parts in order of addition, formulated in a conventional manner. Each of the formulations forms a glossy, apparently coherent, film. Formulation 1 and Formulation 2 each have 20.03% solids and a Polymer/ASR/Wax ratio of 95/0/5.

### Example 4 (Comparative)

Conventional floor coating compositions contain the components recited in TABLE 2, including the polyurethane dispersions and acrylic emulsions of Example 2:

**TABLE 2**

| | **Comp. Form. A** | **Comp. Form. B** | **Comp. Form. C** | **Comp. Form. D** | **Comp. Form. E** |
|---|---|---|---|---|---|
| Water | 39.92 | 34.15 | 26.34 | 44.61 | 43.46 |
| DEEFO® PI-35 defoamer | 0.00 | 0.00 | 0.00 | 0.03 | 0.00 |
| KATHON® CG/ICP (1.5%) | 0.04 | 0.04 | 0.04 | 0.03 | 0.03 |
| ACRYSOL® 644 (42%) | 0.00 | 0.00 | 0.00 | 0.00 | 2.34 |
| ZONYL® FSJ Fluorosurfactant Wetting Aid (1%) | 1.50 | 1.50 | 1.50 | 1.46 | 0.85 |
| NEODOL 25-7 Nonionic Surfactant | 0.00 | 0.00 | 0.00 | 0.25 | 0.00 |
| Diethylene Glycol Ethyl Ether | 2.63 | 2.63 | 2.63 | 4.53 | 5.25 |
| Dibutyl Phthalate plasticizer | 0.00 | 0.00 | 0.00 | 1.27 | 0.00 |
| Tributoxy Ethyl Phosphate Leveling Agent | 0.00 | 0.00 | 0.00 | 0.71 | 1.63 |
| Batch A (35.8%) | 53.00 | 0.00 | 0.00 | 0.00 | 0.00 |
| Batch B (32.32%) | 0.00 | 58.77 | 0.00 | 0.00 | 0.00 |
| Batch C (28.53%) | 0.00 | 0.00 | 66.58 | 0.00 | 0.00 |
| Batch D (38%) | 0.00 | 0.00 | 0.00 | 44.40 | 0.00 |
| Batch E (38%) | 0.00 | 0.00 | 0.00 | 0.00 | 38.83 |
| A-C® 325 G (35%) | 2.91 | 2.91 | 2.91 | 2.42 | 7.60 |
| ACRYSOL® RM-2020 NPR Thickener (20%) | 0.00 | 0.00 | 0.00 | 0.30 | 0.00 |
| | 100.00 | 100.00 | 100.00 | 100.00 | 100.00 |

TABLE 2 lists parts in order of addition, formulated in a conventional manner. Each of the formulations forms a glossy, apparently coherent, film. Comparative Formulations A-C have 20.03% solids and a Polymer/ASR/Wax ratio of 95/0/5. Comparative Formulation D has 20.04% solids and a Polymer/ASR/Wax ratio of 95/0/5. Comparative Formulation E has 20.04% solids and a Polymer/ASR/Wax ratio of 80/5/15.

### Example 5

To test performance, compositions substantially according to the protocols of Examples 3 and 4 are prepared and applied to substrates. The method for applying the coating compositions is described in Annual Book of ASTM Standards, Section 15, Volume 15.04, test procedure ASTM D 3153, except that 0.02 mL per square inch coating is applied to the substrates. The substrate used is based on vinyl composition tiles (Armstrong EXCELON^{™} Vinyl Composition Tiles). A total of 2 coats of floor coating are applied to the white vinyl composition tiles, and 4 coats are applied to the black vinyl composition tiles.

### Example 6

Compositions substantially according to the protocols of Examples 3 and 4 were prepared and applied to substrates as described in Example 5 to be tested for gloss and recoat gloss. The method for determining the gloss performance and recoat gloss performance of coating formulations is described in Annual Book of ASTM Standards, Section 15, Volume 15.04, test procedure ASTM D 1455. Gloss is determined on black vinyl composition tile. Four coats of formulated floor coating are applied to the black tiles in a constant temperature room (CTR) with 45 minutes of dry time between coats with the following room conditions: temperature = 25°C ± 2°C and humidity = 50% ± 2%. Spectral gloss was measured with a BYK Gardner micro-TRI-gloss meter after each coat dried.

The measured 20 Degree gloss values are reported in TABLE 3A:

**TABLE 3A**

| | **1st Coat** | **2nd Coat** | **3rd Coat** | **4th Coat** | **Next Day** |
|---|---|---|---|---|---|
| Formulation 1 | 3 | 16 | 33 | 48 | 40 |
| Formulation 2 | 3 | 16 | 32 | 42 | 36 |
| Comparative Form. A | 5 | 27 | 46 | 55 | 41 |
| Comparative Form. B | 4 | 20 | 33 | 43 | 34 |
| Comparative Form. C | 5 | 18 | 35 | 51 | 40 |
| Comparative Form. D | 4 | 29 | 41 | 47 | 39 |
| Comparative Form. E | 4 | 20 | 37 | 48 | 73 |

The measured next day 20 degree gloss of inventive Formulations 1 and 2 were similar to the comparative PUD control coatings (A-C) and to the comparative acrylic emulsions (D-E). Notably, Formulation 1 had the second highest measured next day 20 degree gloss.

The measured 60 Degree gloss values are reported in TABLE 3B:

**TABLE 3B**

| | **1st Coat** | **2nd Coat** | **3rd Coat** | **4th Coat** | **Next Day** |
|---|---|---|---|---|---|
| Formulation 1 | 25 | 50 | 68 | 78 | 75 |
| Formulation 2 | 26 | 51 | 67 | 75 | 69 |
| Comparative Form. A | 29 | 66 | 78 | 83 | 78 |
| Comparative Form. B | 29 | 56 | 67 | 74 | 70 |
| Comparative Form. C | 31 | 57 | 70 | 79 | 75 |
| Comparative Form. D | 28 | 65 | 74 | 77 | 72 |
| Comparative Form. E | 28 | 57 | 72 | 78 | 71 |

The measured next day 60 degree gloss of inventive Formulations 1 and 2 were similar to the comparative PUD control coatings (A-C) and to the comparative acrylic emulsions (D-E). Notably, Formulation 1 had the second highest measured next day 60 degree gloss as well.

### Example 7

Compositions substantially according to the protocols of Examples 3 and 4 were prepared and applied to substrates as described in Example 5 to be tested for tack free time.

The surface coatings tack-free time is determined using the Zapon tack tester. The tack tester was fabricated out of a 2.5 cm (1-inch) wide bent piece of aluminum sheet metal that is about 0.16 cm (1/16^{th} inch) thick. It is sized so that a 2.5 cm² (1 in²) section will rest flatly on the surface. It is weighted so that when a five gram weight is placed on the center of the aluminum strip it will stand upright. If a weight less than five grams is placed on the center of the aluminum strip it will fall over. The tack tester is placed on the surface of the film with a 500-gram weight placed on the tester. The weight is kept on the tester for five seconds then removed. If the tester falls over within five seconds the coating is deemed tack free.

The coatings were evaluated by measuring the time in minutes it took for the tester to fall. If the tester did not fall within 38 minutes of the coatings application, a time of>38 was recorded. The time that elapsed from when the coating was applied to tack free time is listed in TABLE 4:

**TABLE 4**

| | **1st Coat** | **2nd Coat** | **3rd Coat** | **4th Coat** | **Average** |
|---|---|---|---|---|---|
| Formulation 1 | 17 | 18 | 18 | 22 | 19 |
| Formulation 2 | 17 | 18 | 18 | 22 | 19 |
| Comparative Form. A | 19 | 19 | 18 | 23 | 20 |
| Comparative Form. B | 17 | 18 | 21 | 20 | 19 |
| Comparative Form. C | 22 | 29 | 37 | >38 | >32 |
| Comparative Form. D | 23 | 25 | >38 | >38 | >31 |
| Comparative Form. E | 17 | 18 | 20 | 22 | 19 |

Formulations 1 and 2 dried quickly (an advantage in the commercial application of these coatings where time is short and the floor has to be stripped, coated and open for pedestrian traffic often within 6 to 8 hours), comparable with Comparative Formulations A, B, and E.

### Example 8

Compositions substantially according to the protocols of Examples 3 and 4 were prepared and applied to substrates as described in Example 5 to be tested for foam generation. The method employed for evaluation foam generation is based on a visible observation by a trained panelist of the coated tile immediately after the coating was applied. This test was observed using the black vinyl composition tiles. The lack of foam was rated on a scale of from 1 to 5 (1 = poor; 2 = fair; 3 = good; 4 = very good; and 5 = excellent (no foam)).

The results of foam generation upon application of the coating are listed in TABLE 5:

**TABLE 5**

| | **1st Coat** | **2nd Coat** | **3rd Coat** | **4th Coat** | **Average** |
|---|---|---|---|---|---|
| Formulation 1 | 5 | 5 | 5 | 5 | 5.0 |
| Formulation 2 | 5 | 5 | 5 | 4 | 4.8 |
| Comparative Form. A | 5 | 5 | 5 | 5 | 5.0 |
| Comparative Form. B | 5 | 5 | 5 | 5 | 5.0 |
| Comparative Form. C | 5 | 5 | 5 | 4 | 4.8 |
| Comparative Form. D | 2 | 2 | 2 | 2 | 2.0 |
| Comparative Form. E | 5 | 5 | 5 | 5 | 5.0 |

Only Comparative Formulation D generated a significant and deleterious level of foam.

### Example 9

Compositions substantially according to the protocols of Examples 3 and 4 were prepared and applied to substrates as described in Example 5 to be tested for mop drag.

The method employed for evaluating the level of mop drag is based on a physical feeling generated during the coating application. This test is observed using the black vinyl composition tiles. The presence of drag was rated on a scale of from 1 to 5 (1 = poor (significant drag, difficult to apply the coating); 2 = fair; 3 = good; 4 = very good; 5 = excellent (applicator easily glides over the surface)).

The results of mop drag upon application of the coating are listed in TABLE 6:

**TABLE 6**

| | **1st Coat** | **2nd Coat** | **3rd Coat** | **4th Coat** | **Average** |
|---|---|---|---|---|---|
| Formulation 1 | 5 | 5 | 5 | 5 | 5.0 |
| Formulation 2 | 5 | 5 | 5 | 5 | 5.0 |
| Comparative Form. A | 5 | 5 | 5 | 5 | 5.0 |
| Comparative Form. B | 5 | 5 | 5 | 5 | 5.0 |
| Comparative Form. C | 5 | 5 | 5 | 4 | 4.8 |
| Comparative Form. D | 5 | 4 | 3 | 2 | 3.5 |
| Comparative Form. E | 5 | 5 | 5 | 5 | 5.0 |

Only Comparative Formulation D generated a significant and deleterious level of mop drag.

### Example 10

Compositions substantially according to the protocols of Examples 3 and 4 were prepared and applied to substrates as described in Example 5 to be tested for leveling.

The test method used to evaluate leveling is run on black vinyl composition tiles. Immediately after spreading the floor coating on the tile, an "X" is placed in the wet coating surface by drawing the gauze pad applicator diagonally from corner to corner of the test area. This can also be performed with a mop when the test area is a floor test. After the film has dried, the coating is examined visually to determine the extent of the disappearance of the "X". The leveling was rated on a scale of from 1 to 5, as follows (1 = poor, outline of the "X" ridges and obvious dewetting is present; 2 = fair, plain outline of the "X" and ridges detectable; 3 = good, plain outline of the "X: detectable, but no ridges; 4 = very good, faint outline of the "X" detectable, but no ridges; and 5 = excellent, no "X" detectable).

The results for the leveling evaluation of the dried coatings are reported in TABLE 7:

**TABLE 7**

| | **1st Coat** | **2nd Coat** | **3rd Coat** | **4th Coat** | **Average** |
|---|---|---|---|---|---|
| Formulation 1 | 4 | 4 | 4 | 5 | 4.3 |
| Formulation 2 | 4 | 4 | 4 | 5 | 4.3 |
| Comparative Form. A | 5 | 5 | 5 | 5 | 5.0 |
| Comparative Form. B | 4 | 5 | 5 | 5 | 4.8 |
| Comparative Form. C | 4 | 4 | 4 | 5 | 4.3 |
| Comparative Form. D | 4 | 4 | 3 | 2 | 3.3 |
| Comparative Form. E | 4 | 5 | 5 | 5 | 4.8 |

Formulations 1 and 2 had very good leveling with similar results to Comparative Formulation C, and better than Comparative Formulation D.

### Example 11

Compositions substantially according to the protocols of Examples 3 and 4 were prepared and applied to substrates as described in Example 5 to be tested for additional physical tests (fingernail scratch resistance, water resistance, detergent resistance and scuff resistance) and removability. These tests are next day tests, i.e., are performed the day after the coatings are applied to the test substrate.

The test method used to evaluate the fingernail scratch resistance was performed by striking the coating at a shallow angle with a hard object; in the examples provided, the object was the fingernails of the individual performing the test. This test gives an indication of how the coating will resist marring and scratching. This test is performed by placing the coated substrate on a solid surface and the coating is struck with the trained panelist's fingernails. The trained panelist's fingernails are kept parallel to the coated surface and the impact angle is greater than 45° from the normal of the surface. When comparing coatings, it is important that the same trained panelist perform the test. The following rating system was used (1 = poor, deep wide marks are visible; 2 = fair, deep marks are visible; 3 = good, marks are visible; 4 = very good, thin light scratches are visible; 5 = excellent, no to barely detectable marks are visible).

The method for determining scuff resistance is described in Chemical Specialty Manufacturers Association Bulletin No. 9-73, except commercially available rubber shoe heels were used in place of the recommended 2" (5.1 cm) rubber cubes. Determination of the percentage of the coated substrate area which was covered by black heel marks is conveniently performed with transparent graph paper. A scuff mark, on the other hand, results from a physical displacement of the coating and appears as an area of reduced gloss. Scuff and black heel marks can occur simultaneously at the point where the heel impacts the substrate; i.e., upon removal of a black heel mark, a scuff may be present. The following rating system was used (1 = poor, many wide marks are visible; 2 = fair, many marks are visible; 3 = good, marks are visible; 4 = very good, few marks are visible; and 5 = excellent, no to barely detectable marks are visible).

The water resistance test is performed on black tile coated with four coats of the test finish. The coating is allowed to dry for 16 to 20 hours before running this test. A circle (approximately one inch in diameter) is drawn of the dry coating with a china marker. The spot of clean deionized water fills the circle contacting four coats of finish. The water spot is allowed to stand for sixty minutes at ambient temperature. At the end of this sixty minutes the spot of water is removed by blotting the area with a dry tissue and the circle is evaluated for any discoloration or damage to the film. The 1 hour water resistance was rated on a scale of from 1 to 5, as follows (1 = poor, more than 25 percent of film removed; 2 = fair, 16-25 percent of film removed; 3 = good, 6-15 percent of film removed; 4 = very good, slight gloss reduction and/or less than 5 percent of the film removed; 5 = excellent, no water mark or perceptible damage to the film).

This detergent resistance test is performed on black vinyl composition tile coated with four coats of the test finish. The coating is allowed to dry for 16 to 20 hours before running this test. This coated tile is then scrubbed using a Gardner Scrub Machine with a hogshair bristle brush for 50 cycles with 10 mLs of detergent solution. The detergent solution used is a 1:20 dilution of GP FORWARD™ (Diversey Inc. Sturtevant, Wis. 53177 USA) in water. At the end of this test the tile is allowed to air dry. Evaluate the tile for any discoloration or damage to the coating. The detergent resistance was rated on a scale of from 1 to 5, as follows (1 = poor, more than 20 percent of film removed; 2 = fair, 11-20 percent of film removed; 3 = good, 6-10 percent of film removed; 4 = very good, slight gloss reduction and/or less than 5 percent of the film removed; 5 = excellent, no water mark or perceptible damage to the film).

The test for removability was performed 5 days after the coatings were applied to the black vinyl composition tile. For these tests the coated tiles were stored in a CTR (75°F at 50% humidity) from when the floor coatings were applied to the substrate until right before the test was performed.

The method for determining coating removability is described in Annual Book of ASTM Standards, Section 15, Volume 15.04, test procedure ASTM D 1792, except a commercial floor stripping solution was used for the test and four coats of test finish were applied to the vinyl composition tile substrate. FREEDOM® floor stripper contains multiple reagents to swell the polymer film including: solvents, such as diethylene glycol phenyl ether, and ethylene glycol phenyl ether, amines such as monoethanolamine, and surfactants such as sodium xylene sulfonate. The commercial floor stripper was diluted with clean tap water generating a dilution solution of 1 part FREEDOM® (Diversey Inc. Sturtevant, Wis. 53177 USA) and 7 parts clean tap water. The following rating system was used (1 = poor, 0% to 30% of the coating removed; 2 = fair, 30% to 50% of the coating removed; 3 = good, 50% to 70% of the coating removed; 4 = very good, 70% to 90% of the coating removed; and 5 = excellent, 90% to 100% of the coating was removed).

The results from these tests are reported are reported in TABLE 8:

**TABLE 8**

| | **Fingernail** | **Water Resist.** | **Detergent Resist.** | **Scuff Resist.** | **Removable?** |
|---|---|---|---|---|---|
| Formulation 1 | 2 | 5 | 5 | 5 | Yes - 5 |
| Formulation 2 | 2 | 5 | 5 | 5 | Yes - 4 |
| Comparative Form. A | 5 | 5 | 5 | 5 | No - 2 |
| Comparative Form. B | 4 | 5 | 5 | 4 | No - 1 |
| Comparative Form. C | 5 | 5 | 5 | 3 | No - 1 |
| Comparative Form. D | 4 | 4 | 5 | 2 | No - 1 |
| Comparative Form. E | 5 | 5 | 5 | 4 | Yes - 5 |

The key result that differentiates the inventive polyurethane dispersions containing formulations (Formulations 1 and 2) from conventional polyurethane dispersions containing formulations (Comparative Formulations A-C) is their ease of removal from the substrate.

### Example 12

Compositions substantially according to the protocols of Examples 1 and 2 were prepared and tested for dynamic mechanical analysis to examine the amount of cross-linking present in the polymer dispersions and to determine if this correlated to the desired properties in the floor coating. The test results were obtained for the following polymers using a Rheometrics Mechanical Spectrometer RMS-800 (manufactured by Rheometrics, Inc., Piscataway, NJ) using 8 mm parallel plate fixtures. The unformulated dispersion samples were cast in Teflon® petri dishes and air dried for 48 hours. The samples were inverted and allowed to further dry for 24 hours. The petri dishes were then dried for eight hours at 40°C and placed in a vacuum oven until use. The solid material was analyzed using a dynamic temperature ramp mode from 150°C to -50°C at a cooling rate of 3°C/min. An applied frequency of 6.28 rad/s was used at an initial commanded strain of 0.25%. The auto-strain option was employed to adjust the strain by 40% when the torque dropped below 0.35 g/cm or exceeded 150 g/cm. The auto-tension option was also employed to maintain a constant normal force on the samples during testing. The plates were zeroed at the initial temperature of 150°C. Samples were loaded into the instrument at 150°C. The most informative temperature range for this determination is from 100°C to 150°C, and for greater accuracy in determining the slope, the temperature range should extend over a minimum of 25°C.

Batches 1 and 2 lead to removable floor formulations (Example 11) and have a negative slope in the high temperature region (region above the glass transition temperature), respectively -2.12 and -2.08 slope (x10⁶) dynes per (cm²)(°C). In contrast, the comparative polyurethane dispersions lead to non-removable floor formulations (Example 11) and are relatively flat in this same region, respectively -0.007, -0.0036, and -0.0036 slope (x10⁶) (dynes per (cm²)(°C) for Comparative Batches A-C.

## Claims

1. Use of a polyurethane dispersion having a slope of the stress modulus versus temperature curve from -0.50x10⁶ to -3.00x10⁶ dynes per (cm²)(°C) in a sacrificial floor coating composition, the slope of the stress modulus versus temperature curve being determined according to the paragraph bridging pages 14 and 15 of WO 2012/044502 (the application as published).

2. The use of claim 1, wherein the sacrificial floor coating composition can be substantially removed from a substrate to which it has been applied when contacted with polymer swelling solvents.

3. The use of claim 1, wherein the substrate is vinyl, vinyl composition, granite, marble, linoleum, terrazzo, ceramic, rubber, clay, slate, wood, laminate, or concrete.

4. The use of claim 1, wherein the slope of the stress modulus versus temperature curve is from -1.00x10⁶ to -2.75x10⁶ dynes per (cm²)(°C).

5. The use of claim 1, wherein the slope of the stress modulus versus temperature curve is from -1.65x10⁶ to -2.40x10⁶ dynes per (cm²)(°C).

6. The use of claim 1, wherein the slope of the stress modulus versus temperature curve is from -1.80x10⁶ to -2.30x10⁶ dynes per (cm²)(°C).

7. The use of claim 1, wherein the polyurethane dispersion comprises natural oil polyol based polyurethanes.

8. The use of claim 7, wherein the slope of the stress modulus versus temperature curve is from -1.00x10⁶ to -2.75x10⁶ dynes per (cm²)(°C).

9. The use of claim 7, wherein the slope of the stress modulus versus temperature curve is from -1.65x10⁶ to -2.40x10⁶ dynes per (cm²)(°C).

10. The use of claim 7, wherein the slope of the stress modulus versus temperature curve is from -1.80x10⁶ to -2.30x10⁶ dynes per (cm²)(°C).

## Patentansprüche

1. Verwendung einer Polyurethandispersion mit einer Steigung des Elastizitätsmoduls gegenüber der Temperaturkurve von -0,50 x 10⁶ bis -3,00 x 10⁶ Dyn pro (cm²)(°C) in einer Opferbodenbelagzusammensetzung, wobei die Steigung des Elastizitätsmoduls gegenüber der Temperaturkurve gemäß dem Absatz über die Seiten 14 und 15 der WO 2012/044502 (die Anmeldung wie veröffentlicht) bestimmt wird.

2. Verwendung gemäß Anspruch 1, wobei die Opferbodenbelagzusammensetzung im Wesentlichen von einem Substrat, auf das es, wenn es mit Polymerquelllösungsmitteln in Kontakt gebracht worden ist, aufgetragen worden ist, entfernbar ist.

3. Verwendung gemäß Anspruch 1, wobei das Substrat Vinyl, Vinylzusammensetzung, Granit, Marmor, Linoleum, Terrazzo, Keramik, Kautschuk, Ton, Schiefer, Holz, Laminat oder Beton ist.

4. Verwendung gemäß Anspruch 1, wobei die Steigung des Elastizitätsmoduls gegenüber der Temperaturkurve von -1,00 x 10⁶ bis -2,75 x 10⁶ Dyn pro (cm²)(°C) beträgt.

5. Verwendung gemäß Anspruch 1, wobei die Steigung des Elastizitätsmoduls gegenüber der Temperaturkurve von -1,65 x 10⁶ bis -2,40 x 10⁶ Dyn pro (cm²)(°C) beträgt.

6. Verwendung gemäß Anspruch 1, wobei die Steigung des Elastizitätsmoduls gegenüber der Temperaturkurve von -1,80 x 10⁶ bis -2,30 x 10⁶ Dyn pro (cm²)(°C) beträgt.

7. Verwendung gemäß Anspruch 1, wobei die Polyurethandispersion auf Polyol aus natürlichem Öl basierende Polyurethane beinhaltet.

8. Verwendung gemäß Anspruch 7, wobei die Steigung des Elastizitätsmoduls gegenüber der Temperaturkurve von -1,00 x 10⁶ bis -2,75 x 10⁶ Dyn pro (cm²)(°C) beträgt.

9. Verwendung gemäß Anspruch 7, wobei die Steigung des Elastizitätsmoduls gegenüber der Temperaturkurve von -1,65 x 10⁶ bis -2,40 x 10⁶ Dyn pro (cm²)(°C) beträgt.

10. Verwendung gemäß Anspruch 7, wobei die Steigung des Elastizitätsmoduls gegenüber der Temperaturkurve von -1,80 x 10⁶ bis -2,30 x 10⁶ Dyn pro (cm²)(°C) beträgt.

## Revendications

1. Utilisation d'une dispersion de polyuréthane ayant une pente de la courbe du module de contrainte en fonction de la température allant de - 0,50 x 10⁶ à - 3,00 x 10⁶ dynes par (cm²)(°C) dans une composition de revêtement de sol sacrificielle, la pente de la courbe du module de contrainte en fonction de la température étant déterminée selon le paragraphe à cheval sur les pages 14 et 15 du document WO 2012/044502 (la demande telle que publiée).

2. L'utilisation de la revendication 1, dans laquelle la composition de revêtement de sol sacrificielle peut être substantiellement retirée d'un substrat sur lequel elle a été appliquée lorsqu'elle est mise en contact avec des solvants de gonflement de polymère.

3. L'utilisation de la revendication 1, dans laquelle le substrat est un vinyle, une composition vinylique, du granite, du marbre, du linoléum, du terrazzo, de la céramique, du caoutchouc, de l'argile, de l'ardoise, du bois, du stratifié, ou du béton.

4. L'utilisation de la revendication 1, dans laquelle la pente de la courbe du module de contrainte en fonction de la température va de - 1,00 x 10⁶ à - 2,75 x 10⁶ dynes par (cm²)(°C).

5. L'utilisation de la revendication 1, dans laquelle la pente de la courbe du module de contrainte en fonction de la température va de - 1,65 x 10⁶ à - 2,40 x 10⁶ dynes par (cm²)(°C).

6. L'utilisation de la revendication 1, dans laquelle la pente de la courbe du module de contrainte en fonction de la température va de - 1,80 x 10⁶ à - 2,30 x 10⁶ dynes par (cm²)(°C).

7. L'utilisation de la revendication 1, dans laquelle la dispersion de polyuréthane comprend des polyuréthanes à base de polyols d'huiles naturelles.

8. L'utilisation de la revendication 7, dans laquelle la pente du module de contrainte en fonction de la courbe de température va de - 1,00 x 10⁶ à - 2,75 x 10⁶ dynes par (cm²)(°C).

9. L'utilisation de la revendication 7, dans laquelle la pente de la courbe du module de contrainte en fonction de la température va de - 1,65 x 10⁶ à - 2,40 x 10⁶ dynes par (cm²)(°C).

10. L'utilisation de la revendication 7, dans laquelle la pente de la courbe du module de contrainte en fonction de la température va de - 1,80 x 10⁶ à - 2,30 x 10⁶ dynes par (cm²)(°C).
